Europäisches Patentamt

European Patent Office

Office européen des brevets

(19)

(11) EP 0 507 303 B1

(12) **EUROPÄISCHE PATENTSCHRIFT**

(45) Veröffentlichungstag und Bekanntmachung des Hinweises auf die Patenterteilung:
**21.02.1996 Patentblatt 1996/08**

(51) Int Cl.⁶: **H04B 7/204**, H04Q 11/04

(21) Anmeldenummer: **92105707.1**

(22) Anmeldetag: **02.04.1992**

(54) **Schaltungsanordnung zur Vermittlung von Datenströmen**

Circuit arrangement for switching data streams

Circuit pour la commutation de flux de données

(84) Benannte Vertragsstaaten:
**FR GB IT**

(30) Priorität: **05.04.1991 DE 4111037**

(43) Veröffentlichungstag der Anmeldung:
**07.10.1992 Patentblatt 1992/41**

(73) Patentinhaber: **ANT Nachrichtentechnik GmbH**
**D-71522 Backnang (DE)**

(72) Erfinder: **Piontek, Manfred, Dipl.-Ing.**
**W-7129 Ilsfeld (DE)**

(56) Entgegenhaltungen:
**EP-A- 0 241 229**     **EP-A- 0 269 803**

- **ANT NACHRICHTENTECHNISCHE BERICHTE Nr. 8, Februar 1991, BACKNANG (DE) Seiten 16 - 23; BERNER ET AL: 'Ein modulares Vermittlungssystem für zukünftige Satelliten-Nutzlasten'**
- **IEEE GLOBAL TELECOMMUNICATIONS CONFERENCE Bd. 2, November 1987, TOKYO (JP) Seiten 924 - 929; SUZUKI ET AL: 'Channel reallocating onboard baseband switch for SS-TDMA Communications system'**

EP 0 507 303 B1

**Beschreibung**

Die Erfindung bezieht sich auf eine Schaltungsanordnung zur blockierungsfreien Vermittlung von N Eingangsdatenströmen gemäß Oberbegriff des Patentanspruches 1 oder 2.

Durch die deutsche Patentschrift 36 41 561 ist eine Schaltungsanordnung zur Vermittlung von PCM-Kanälen im Basisband bekanntgeworden, wobei die an n Eingangsports ankommenden seriellen zu vermittelnden Daten blockweise parallelgewandelt, in einem Speicher zwischengespeichert und nach dem Auslesen wieder serialisiert n Ausgangsports zugeführt werden.

In den bekannten, zumeist terrestrich eingesetzten Vermittlungssytemen wird die Steuerung der zwischenspeichernden Zeitstufe entweder durch Mikrocomputer und/oder EPROM- Bausteine mit komplizierter Adressberechnung und Adressumrechnung durchgeführt. Dies erfordert einen hohen Aufwand an Hard- und Software und zieht besonders bei größeren Systemen Geschwindigkeitseinschränkungen nach sich. Außerdem bestehen Probleme der Verfügbarkeit von raumfahrtqualifizierten schnellen Mikrocomputern und EPROMs, deren Einsatz in Satellitenanwendungen generell problematisch ist.

Der vorliegenden Erfindung lag die Aufgabe zugrunde, eine Schaltungsanordnung der eingangs genannten Art anzugeben, bei der die Steuerung der zwischenspeichernden Zeitstufe nicht durch Mikrocomputer und/oder EPROM-Bausteine und keine komplizierte Adressberechnungen und Adressumrechnungen durchzuführen sind. Geschwindigkeitseinschränkungen sollen hierbei auch bei größeren Systemen nicht auftreten. Der Aufwand für die erfindungsgemäße Schaltungsanordnung soll nicht sonderlich hoch sein.

Diese Aufgabe wurde gelöst durch gekennzeichnende Merkmale des Anspruches 1 bzw. 2. Vorteilhafte Ausgestaltungen ergeben sich durch die Unteransprüche.

Die erfindungsgemäße Schaltungsanordnung weist die Vorteile auf, daß die Steuerung der Zeitstufe nur einen kleinen Aufwand erfordert, was sich hinsichtlich Raumbedarf und Leistungsbedarf auswirkt. Die erfindungsgemäße Anordnung benötigt nicht Baugruppen wie z.B. Mikrocomputer, EPROMS oder andere langsame Einheiten, welche zudem für Raumfahrtanwendungen wegen Strahlungsbeeinflußung, Temperaturbeeinflußung usw. problematisch sind; der Systemdurchsatz wird also nicht durch solche Einheiten mit kleinerer Verarbeitungsgeschwindigkeit eingeschränkt.

Vielmehr können einfache und zuverlässige, nicht beeinflußbare Festverdrahtungen verwendet werden, und es kommen aufwandsarme schnelle Zähler zum Einsatz.

Es folgt nun die Beschreibung der Erfindung anhand der Figuren.

Das erfindungsgemäße Vermittlungssystem bezieht sich auf sogenannte Busspeicher-Strukturen mit zentraler Zeitstufe, wobei mehrere beispielsweise serielle Eingangsdatenströme nach einer Parallelisierung auf einen Datenbus gemultiplext werden.

Zur zeitlichen Vermittlung werden die gemultiplexten Daten über einen Input-Bus jeweils rahmenweise in die genannte Zeitstufe eingeschrieben. Diese Speicheranordnung weist zwei Bereiche auf, welche in der bekannten Ping-Pong-Technik, nämlich abwechselnd Schreiben und Lesen dieser beiden Bereiche, so daß ein kontinuierlicher Datenfluß erhalten wird, betrieben werden. Innerhalb des nächsten Zeitrahmens werden die Daten des zuletzt beschriebenen Bereiches in der gewünschten Reihenfolge auf einen Output-Bus gegeben, wo sie durch Demultiplexen und anschließender Parallel-Seriellwandlung an den Ausgängen des Vermittlungssystems wieder zur Verfügung stehen. Sowohl das Multiplexen als auch das Demultiplexen der Datenströme kann dabei beispielsweise durch einen integrierten Baustein erfolgen, welcher die Seriell-Parallelwandlung der Eingangsdatenströme und die Multiplexfunktion bzw. die Parallel-Seriellwandlung und Demultiplexfunktion ausführt. In Bild 1 ist die Multiplexfunktion durch MUX und die Demultiplexfunktion durch DEMUX dargestellt. Die Datenquelle des Input-Bus ist der MUX, und seine Datensenke ist die zwischenspeichernde Zeitstufe (T-Stage) mit den beiden Bereichen Ping-Pong, welche gesteuert wird durch die T-Stage control. Für den Output-Bus gilt das Umgekehrte wie für den Input-Bus Geschilderte.

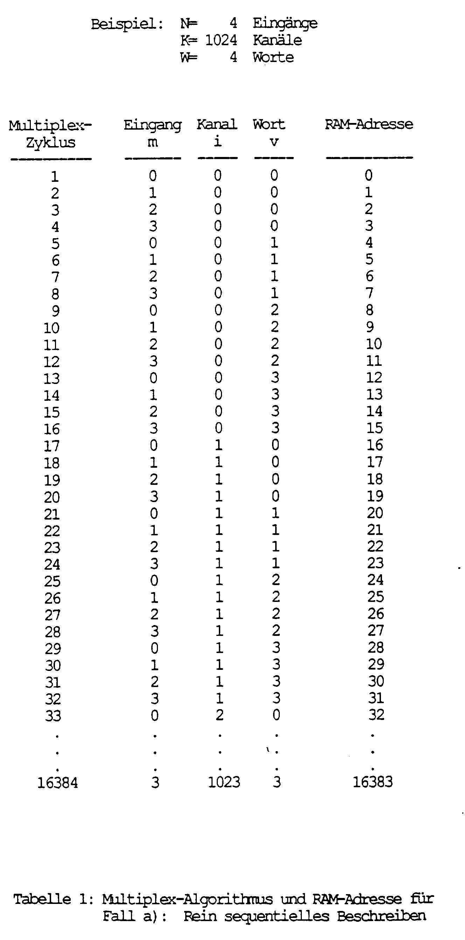

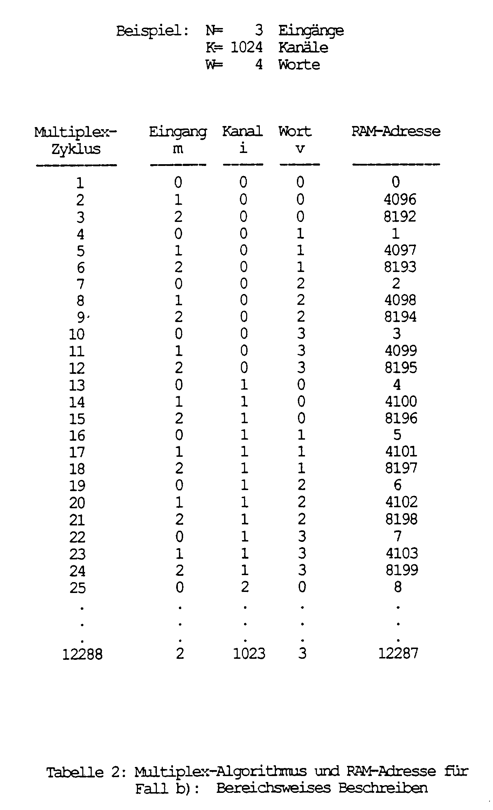

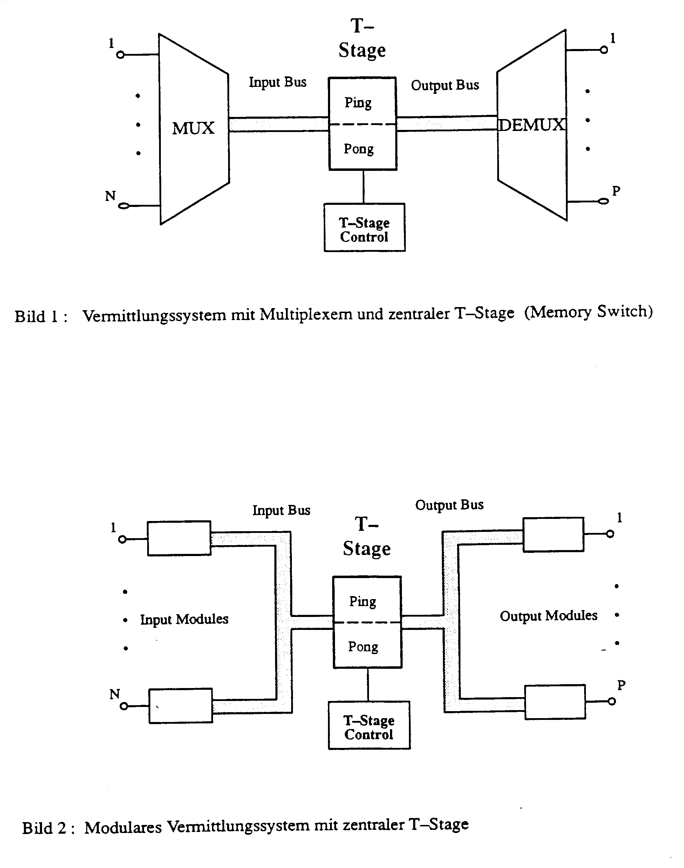

Die MUX/DEMUX-Funktion kann aber auch durch verschiedene Ein- und Ausgangsmodule durchgeführt werden, welche die parallelisierten Daten in sequentieller Reihenfolge auf den Input-Bus multiplexen bzw. vom Output-Bus nehmen, siehe hierzu Figur 2.

Die beiden Strukturen nach Bild 1 und Bild 2 haben die rahmenweise, zentrale Speicherung von N Eingangsdatenströmen gleicher Datenrate in der zwischenspeichernden Zeitstufe T-Stage bei gleichem Multiplexalgorithmus gemeinsam.

Aufgabe des zugrundeliegenden Vermittlungssystems ist, die blockierungsfreie Vermittlung von N Eingangsdatenströmen auf Kanalbasis auf P Ausgangsdatenströme. Dabei sind die N Eingangsdatenströme in zeitliche Rahmen der Länge T unterteilt und enthalten jeweils K Kanäle (Slots) mit der Bitrate R. Die P Ausgangsdatenströme sind ebenfalls in zeitliche Rahmen der Länge T unterteilt und enthalten jeweils U Kanäle (Slots) mit der gleichen Bitrate R, wobei gelten muß:

$$N \cdot K = P \cdot U.$$

Der Input- bzw. Output-Bus weist eine Breite von S Bit auf. Ein Kanal ist daher in $W = R \cdot T/S$ Worte der Länge S unterteilt, die nacheinander über den jeweiligen Bus übertragen werden, wenn man von dem Sonderfall $W = 1$ absieht.

Die Multiplex- bzw. Takt- Frequenz des Busses beträgt somit $f_B = N \cdot K \cdot R/S$ Hz.

Die beiden Bereiche der Zeitstufe T-Stage haben eine Kapazität von N · K · R · T Bit, wobei die Breite der Busbreite S entspricht und die Tiefe demnach N · K · R · T/S beträgt.

Das Vermittlungsprinzip basiert darin, daß die Zeitstufe nach einem festen Algorithmus mit den Daten beschrieben wird und mit Hilfe einer sogenannten Adresstabelle, einem Steuerspeicher, in dem die Vermittlungsvorschrift niedergeschrieben ist, wahlfrei in den Output-Bus ausgelesen wird.

Für beide Zeitstufenbereiche wird nur eine Adresstafel benötigt, welche beispielsweise an Bord eines Satelliten durch einen On Board Controller beschrieben und durch einen Zähler rein sequentiell ausgelesen wird. Für die raum- und zeitlagenrichtige Vermittlung der einzelnen Kanäle müssen in der Adresstafel lediglich die Kanalnummern i und die dazugehörige Nummer m des betreffenden Eingangsdatenstroms abgespeichert werden.

Der richtige Auslesezeitpunkt eines Kanals aus der Zeitstufe wird dabei durch die Position von m und i in der Adresstafel bestimmt.

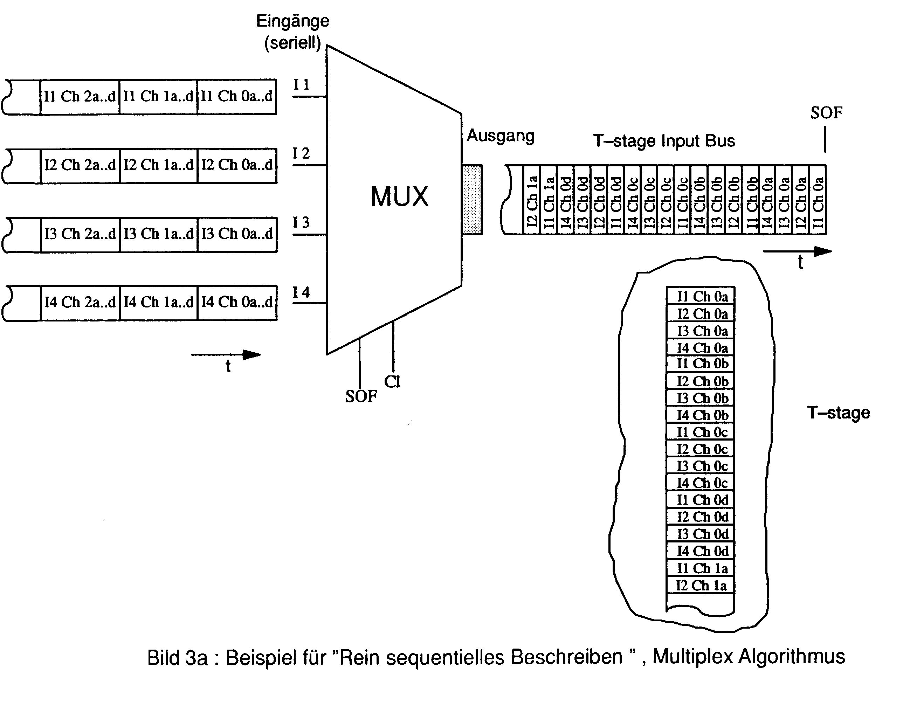

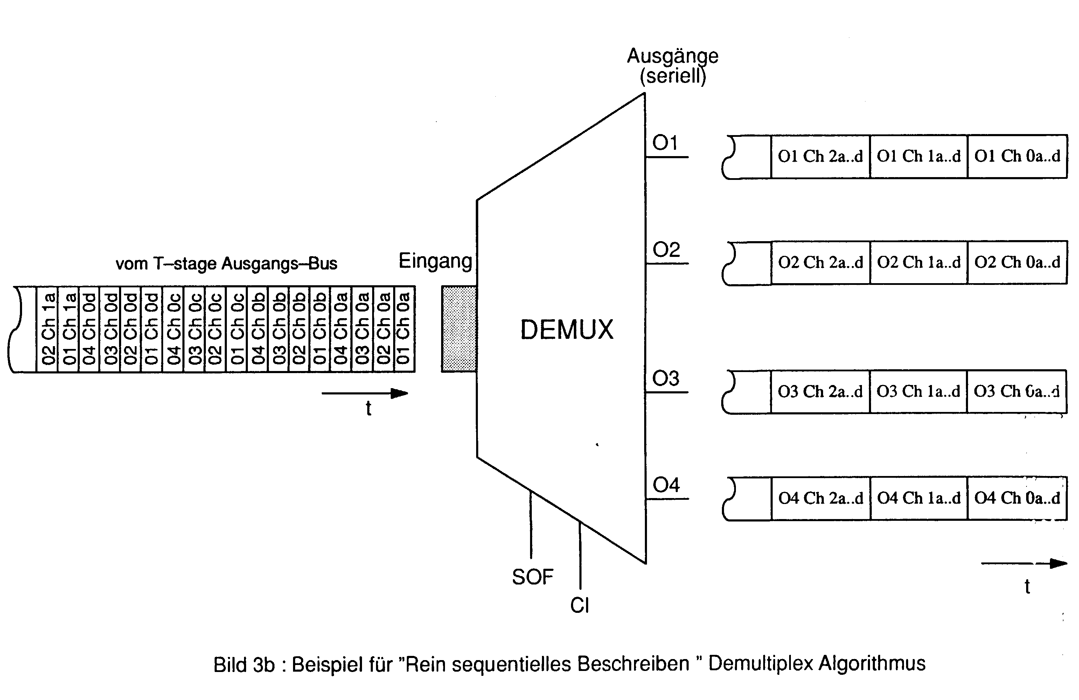

Das Multiplexen bzw. Demultiplexen der Datenströme erfolgt in rein sequentieller Weise nach einem festen Algorithmus, welcher mittels Zähler realisiert ist. Ein Beispiel hierfür zeigt das System mit N = 4 Eingängen und P = 4 Ausgängen nach Figur 3. Die Wortanzahl eines Kanales beträgt dabei 4 Worte, wobei die Wortlänge gleich der Busbreite S ist. Dies bedeutet, daß ein Kanal innerhalb 4 Multiplexzyklen über den Input-Bus transportiert werden muß. Das Gleiche gilt für den Output-Bus. Beginnend mit einem Rahmenanfang, dem Start-of-Frame-Kommando, SOF, wird jeweils das erste Wort eines jeden Einganges seriell in den MUX übertragen und dort in 4 Wandlern parallel auf die Busbreite S umgesetzt. Danach werden diese 4 Worte nacheinander beginnend mit Wort 1 von Kanal 1 des Eingangs 1, (I1 Ch 1a), dann Wort 1 Kanal 1 Eingang 2, (I2 Ch 1a), dann Wort 1 Kanal 1 Eingang 3 (I3 Ch 1a) und zuletzt Wort 1 Kanal 1 Eingang 4 (I4 Ch 1a) auf den Input-Bus gegeben. Das Gleiche geschieht sodann mit den übrigen 3 Wörtern der Kanäle 1, und danach werden die ersten Worte von den Kanälen 2 in den MUX geschrieben usw., siehe Bild 3a.

Das Demultiplexen der vom Output-Bus kommenden Worte kann exakt als invertiertes Multiplexen betrachtet werden. Die ersten vier Worte des betreffenden Rahmens, werden nacheinander in den DEMUX geschrieben, siehe Bild 3b. Dort werden sie gleichzeitig in serielle Form umgesetzt und auf die 4 Ausgänge gegeben. Das Gleiche geschieht dann mit dem Wort 2 des betreffenden Kanales usw..

Da der gesamte Multiplex-/Demultiplex-Algorithmus ohne externe Steuerung erfolgt, d. h. die notwendigen Zähler u.a. Bauelemente können im MUX bzw. DEMUX integriert werden, muß zur eigentlichen Vermittlungssteuerung ausschließlich die zwischenspeichernde Zeitstufe T-Stage gesteuert werden, diese Funktion wird von der Einheit T-Stage-Control siehe Figur 1 und 2 wahrgenommen.

Aus Gründen der Ping-Pong-Technik, wobei zu einem Zeitpunkt der eine Bereich der Zeitstufe beschrieben und der andere gelesen wird, muß die Steuerung also gleichzeitig eine Schreib- und eine Leseadresse generieren.

Für die Steuerung der Zeitstufe werden im folgenden gemäß der beiden Patentansprüche 1 und 2 zwei Lösungen angeboten, die jeweils beide minimalen Hardwareaufwand aufweisen, - es werden nur Zähler- und Steuerspeicherelemente benötigt - und sich daher sehr gut für die Steuerung der beschriebenen Vermittlungsstruktur eignen.

I. Das kurz mit "rein sequentiellem Beschreiben" bezeichnete Vorgehen gemäß Patentanspruch 1 stellt die Lösung mit dem absolut minimalen Aufwand für die Steuerung dar, sofern das Produkt aus der Anzahl der Eingänge N mit der Anzahl W der Worte eines Kanales einer Zweierpotenz genügt, also $N \cdot W = 2^x$ mit x = Element aus der Menge der natürlichen Zahlen. die Anzahl der Kanäle pro Rahmen kann beliebig sein.

In Bild 3 ist der Multiplex-Algorithmus sowie die Reihenfolge der gespeicherten Worte in der Zeitstufe erkennbar. Die Anordnung der einzelnen Worte in der Zeitstufe entsprechen genau der sequentiellen Abfolge der Worte auf dem Input-Bus.

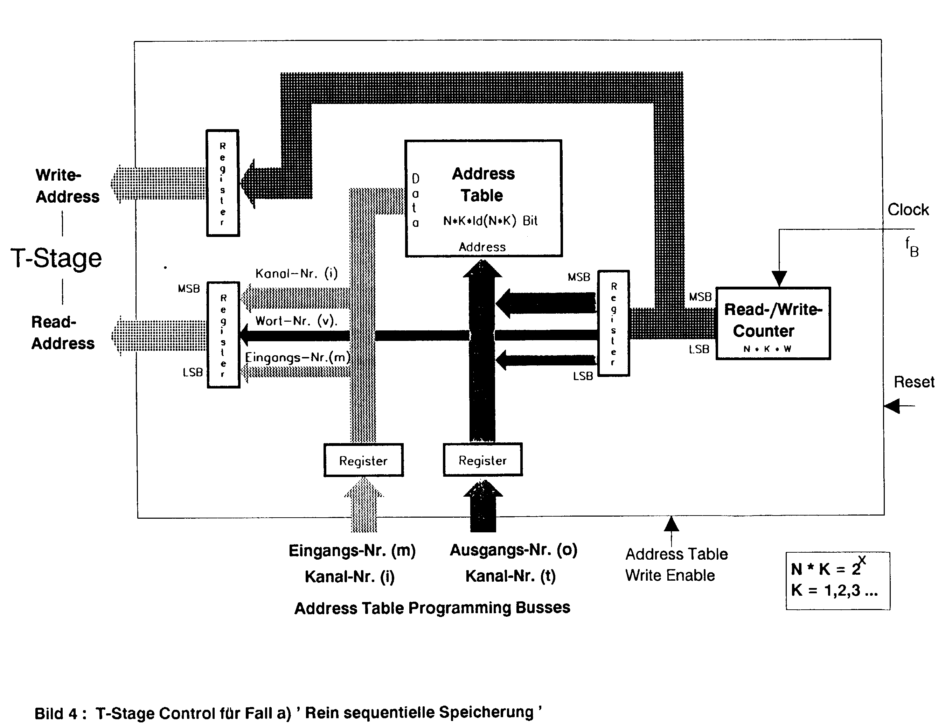

Bei diesem rein sequentiellen Beschreiben werden die Schreibadressen durch einen Schreib-Lese-Zähler N · K · W erzeugt, welcher mit dem Multiplex-Takt $f_B$ des Systems inkrementiert wird. Ein Blockschaltbild für die Zeitstufensteuerung ist in Figur 4 dargestellt. Sie besteht im wesentlichen aus der Adresstafel und dem Schreib-Lese-Zähler. Die übrigen mit Register bezeichneten Blöcke dienen zum Freigeben und Sperren der Busleitungen und können somit auch als Leitungstreiber z.B. mit Tri-State-Zustand ausgeführt sein.

Die Adresstafel ist ein Steuerspeicher für die Zeitstufe, welcher z.B. mittels eines Controllers programmiert bzw. beschrieben wird. Der Controller seinerseits bearbeitet die Signalisiermeldungen der Teilnehmer und erstellt daraus das Programm für die Adresstafel. Das Beschreiben der Adresstafel muß in Pausen der Datenvermittlung erfolgen, d.h. wenn aus der Adresstafel keine Daten ausgelesen werden. Dies ist bei einem Satellitensystem beispielsweise dann der Fall, wenn im TDM-Rahmen Synchronisations-Meldungen bzw. Signalisiermeldungen übertragen werden, die nicht durch das Vermittlungssytem geschleust werden.

Wie schon erwähnt, genügt es für beide Bereiche der Zeitstufe eine einzige Steuerung zu haben, sofern diese gleichzeitig eine Schreib- und eine Leseadresse generieren kann. Die Schreibadresse wird direkt vom Lese-Schreib-Zähler erzeugt.

Die Leseadressen für einen auszulesenden Kanal, der ja in diesem Beispiel aus 4 Worten besteht, die aufgrund des Multiplex-Algorithmus aber nicht direkt nacheinander in der Zeitstufe stehen, können aber nicht direkt gebildet zu werden. Die jeweilige RAM-Adresse für den Lesevorgang aus der Zeitstufe für das v-te Wort des i-ten Kanales vom Eingang m berechnet sich dabei nach folgender Gleichung:

$$\text{RAM-Adresse} = i \cdot N \cdot W + v \cdot N + m \qquad (1).$$

Die Werte i und m werden dabei aus der Adresstafel ausgelesen, deren Lese-Adresse sich aus den ld (K) höchsten und den ld (N) niederwertigsten Bit des Leseschreibzählers ergibt, wobei ld für logarithmus dualis steht. Die Wortnummer v ergibt sich aus den ld (W) mittleren Bits des Zählers. Die zuvor genannte Gleichung (1) wird ausschließlich durch geeignete Festverdrahtung dieser 3 Werte an dem im Bild 4 gezeigten Register gebildet.

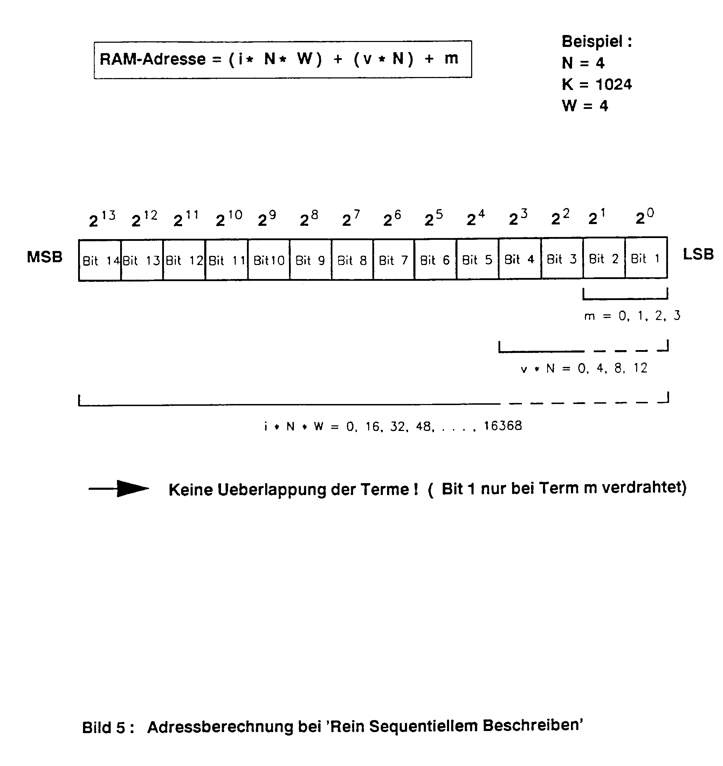

Figur 5 zeigt die Bildung der Leseadresse für den Fall des "rein sequentiellen Beschreibens". In diesem Beispiel besteht die Adresse der Zeitstufe bei einer Anzahl von K =1024 Kanälen aus ld (N · K · W) = ld 16384 = 14 Bits . Der erste Term der Gleichung (1) kann dabei die Werte

i · N · W = 0, 16, 32, 48,...,16368 annehmen. Somit wird der Bus, der die Kanal-Nummer i überträgt an die 10 höherwertigen Bits des 14 Bit-Registers angeschlossen. Der zweite Term der Gleichung (1) nimmt die Werte

v · N = 0, 4, 8 und 12

an. Folglich wird der Wort-Nummer-Bus, der durch die ld (W) = 2 mittleren Bits des Zählers gebildet ist, an die Bits 2 und 3 des Registers angeschlossen. Die jeweilige Wortnummer eines Kanals muß also nicht in der Adresstafel abgespeichert werden, sie steht durch die Art der Adress-Bildung am Schreib-Lese-Zähler direkt zur Verfügung, was wiederum eine Speicherplatzersparnis darstellt.

Der letzte Term m der obigen Gleichung (1) kann in diesem Beispiel die Werte m = 0, 1, 2, 3 annehmen und bildet somit Bit 0 und Bit 1 des Registers.

Aufgrund der Bedingung $N \cdot K = 2^x$ ergeben sich nach Bild 5 keine Überlappungen im Wertebereich der drei Terme. Aufgrund dessen kann genannte Gleichung (1) ohne explizite Multiplikation bzw. Summation in einfacher Weise durch Festverdrahtung der Parameter gebildet werden.

Eine Überlappung der Zahlenbereiche würde bedeuten, daß das rein sequentielle Verfahren nicht oder nur durch den zusätzlichen Hardware-Einsatz von Multiplizierern und Addierern, was mehr Aufwand und Geschwindigkeitsverlust darstellt, angewendet werden könnte.

In Tabelle 1 ist noch einmal in anderer Weise der Multiplex-Algorithmus sowie die Adresse des jeweiligen Kanals bzw. Wortes in der Zeitstufe RAM dargestellt.

II. Das "bereichsweise Beschreiben" der Zeitstufe gemäß Patentanspruch 2 stellt ein Verfahren mit geringfügig höherem Aufwand dar, kommt aber ebenfalls bei der Bildung der Leseadresse ohne Multiplizierer oder Addierer aus. Die Bedingung hierfür ist, daß das Produkt der Anzahl der Kanäle K eines Rahmens mit der Anzahl der Worte W eines Kanals eine Zweierpotenz sein muß:

$$K \cdot W = 2^x \text{ mit } x = 0,1,2,3 \text{ usw.}$$

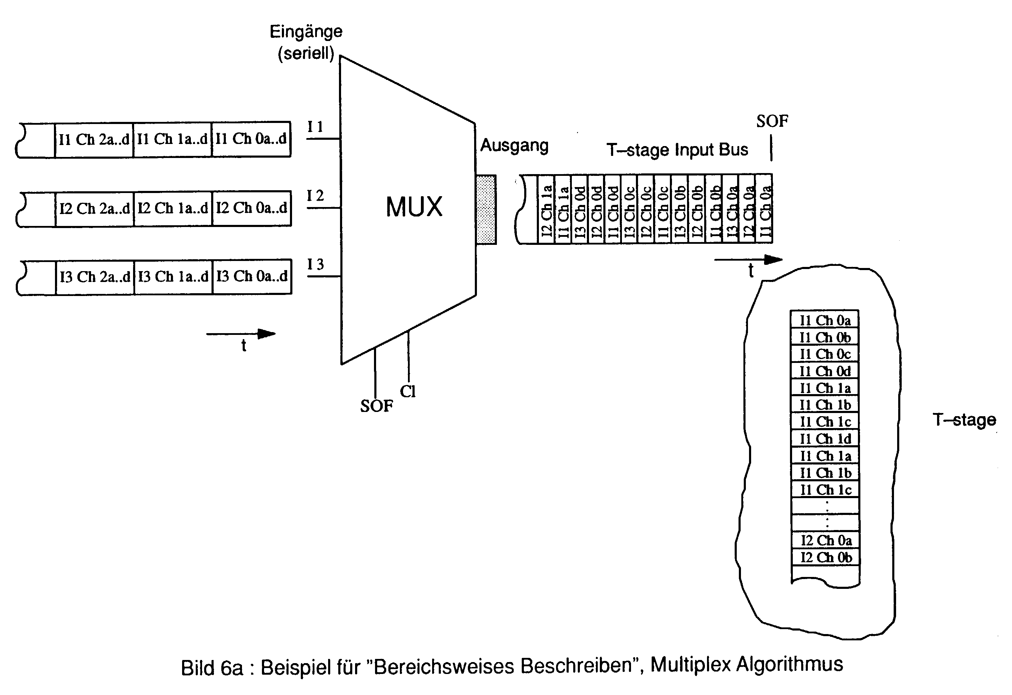

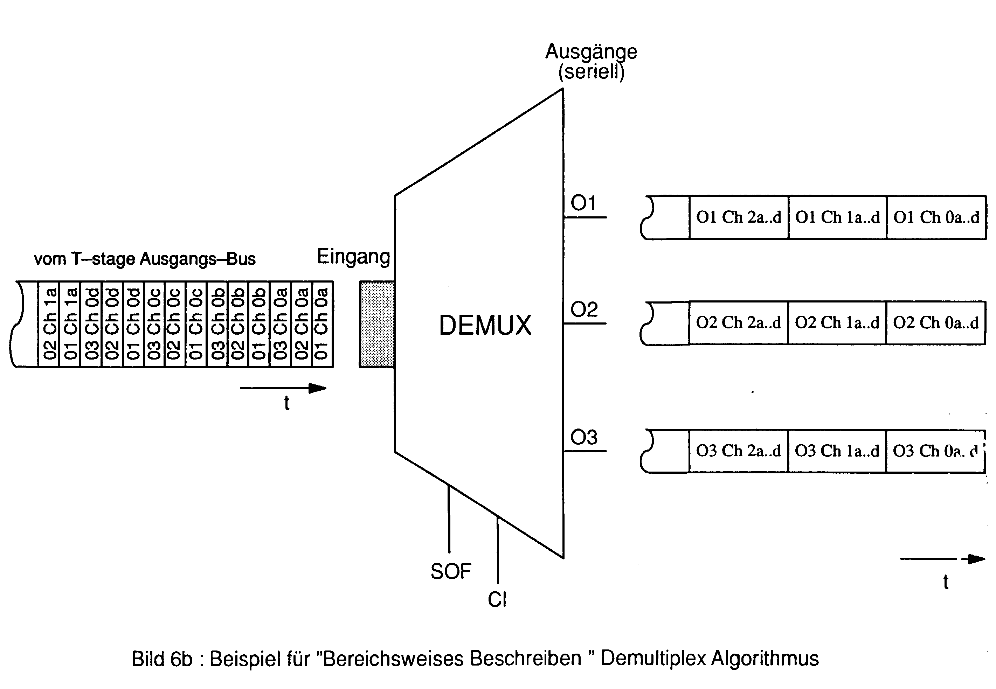

Die Anzahl N der Eingänge des Vermittlungssystems darf dabei beliebig sein. In Figur 6 ist der Multiplex-Algorithmus, welcher der gleiche ist wie im Fall der Figur 3, sowie die nunmehr bereichsweise Anordnung der Worte bzw. Kanäle in der Zwischenspeicherzeitstufe dargestellt und zwar für ein Beispiel für N = 3, P = 3, K $= 2^x$ sowie W = 4. Bei der bereichsweisen Anordnung werden die von einem Eingang kommenden Kanäle zusammenhängend in jeweils einem Bereich der Zeitstufe abgespeichert, d.h. die Zeitrahmen der einzelnen Eingänge am MUX sind nacheinander lückenlos in der Zeitstufe abgespeichert. Somit können die Schreibadressen der Zeitstufe nicht mehr lediglich mit einem einzigen Zähler erzeugt werden, der wie im Fall des Patentanspruches 1 in einfacher Weise inkrementell Adressen generiert.

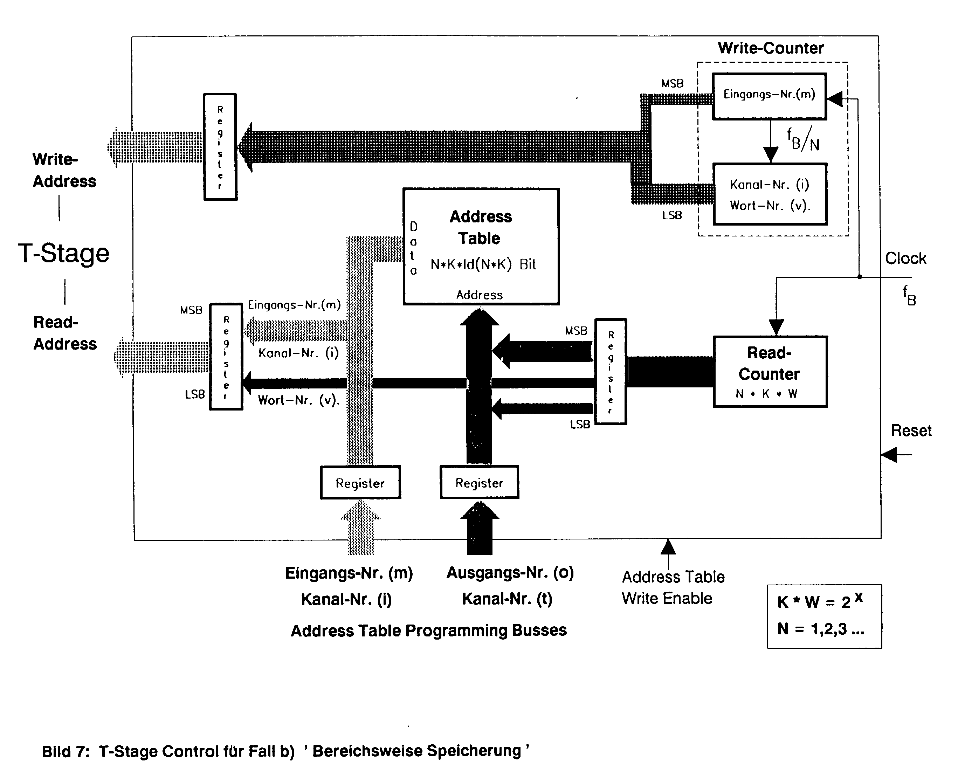

Wie in Figur 7 entnehmbar ist, werden bei der Zeitstufensteuerung für den Fall des bereichsweisen Beschreibens die Schreibadressen durch eine Anordnung von zwei Zählern erzeugt, wobei der eine sogenannte Eingangszähler mit der Größe N mit der Frequenz $f_B$ und der andere der sogenannte Kanal/Wortzähler mit der Größe K · W mit der Frequenz $f_B/N$ durch das Überlaufbit des Eingangszählers getaktet wird.

Die Leseadresse der Zeitstufe wird wie im Fall des Patentanspruches 1 durch eine Adresstafel und mittels eines Lesezählers gebildet. Die jeweilige RAM-Adresse für den Lesevorgang aus der Zeitstufe berechnet sich für das v-te Wort des i-ten Kanals des Einganges m nach folgender Gleichung:

$$\text{RAM-Adresse} = m \cdot K \cdot W + i \cdot W + v \qquad (2).$$

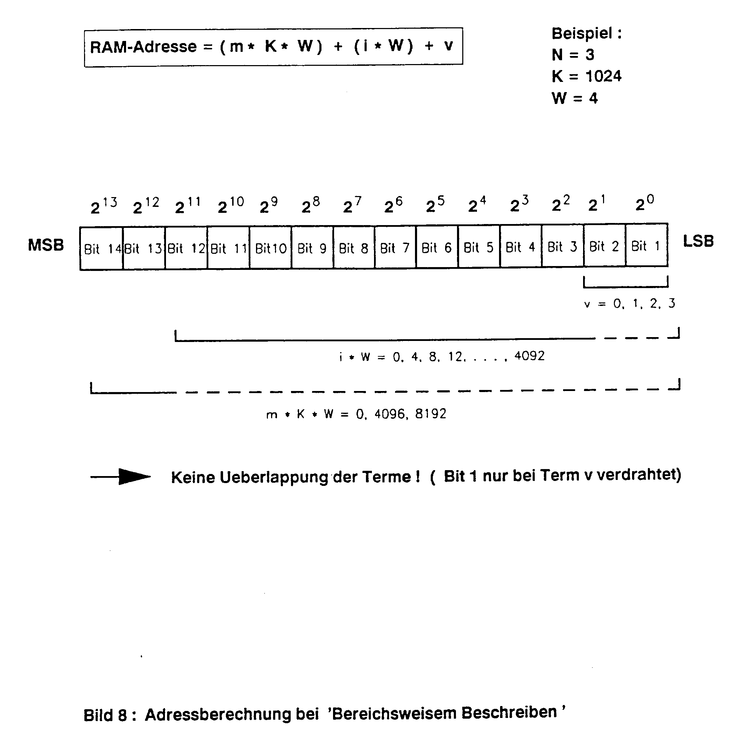

Die Figur 8 gibt die Bildung der Leseadresse für die Gleichung (2) wieder. In diesem Beispiel besteht die Zeitstufenadresse aus ld (N · K · W) = ld 12288 = 14 Bits . Wie bereits für den Fall der sequentiellen Beschreibung nach Patentanspruch 1 gezeigt, ergeben sich ebenfalls keine Überlappungen der Wertebereiche. Aufgrund der andersartigen Speicherbelegung müssen jedoch die Anschlüsse der Busleitungen an das Register für die Zeitstufenleseadresse anders ausgeführt werden. Wie auch aus Figur 7 entnehmbar, bildet die Eingangsnummer m die höchstwertigen Bits MSB, hier die Bits 12 und 13. Die Kanalnummer i wird von den Bits 2 bis 11 gebildet, während die Wortnummer v von den niederwertigsten Bits LSB, in diesem Fall Bit 0 und 1 erzeugt werden.

In Tabelle 2 sind für das angegebene Beispiel auf etwas andere Weise der Multiplex-Algorithmus sowie die Position des jeweiligen Kanals bzw. Wortes in den RAM-Speicher der Zeitstufe dargestellt.

**Patentansprüche**

1. Schaltungsanordnung zur blockierungsfreien Vermittlung von N Eingangsdatenströmen, die jeweils eine TDMA-Rahmenstruktur der Länge T aus K Kanälen mit jeweils W Worten zu je S Bit aufweisen und auf einen Input-Bus mit der Wortbreite S gemultiplext und von dort in einer Zeitstufe zwischengespeichert und im nächsten Zeitrahmen auf einen Output-Bus mit der Wortbreite S ausgespeichert werden, auf P Ausgangsdatenströme, die jeweils ebenfalls eine TDMA-Rahmenstruktur der Länge T aus U Kanälen mit jeweils W Worten zu je S Bit aufweisen und aus dem Output-Bus gemultiplext werden, wobei jeder Kanal die einheitliche Bitrate R aufweist und wobei die Bedingung $N \cdot K = P \cdot U$ gilt,

wobei ein Steuerspeicher vorgesehen ist, mittels dem die einzelnen Speicherzellen der Zeitstufe entsprechend der Vermittlungsvorschrift adressiert und die darin enthaltenen Worte auf den Output-Bus ausgelesen werden, dadurch gekennzeichnet, daß $N \cdot W = 2^x$ mit x = einer natürlichen Zahl $\geq$ 1 ist, daß die Zeitstufe aus dem Input-Bus sequentiell beschrieben wird, daß ein einziger Binär-Zähler vorgesehen ist, der modulo $N \cdot K \cdot W$ zählt und sowohl die Schreib- als auch die LeseAdressen erzeugt, daß die Leseadressen nach der Gleichung $i \cdot N \cdot W + v \cdot N + m$ mit den variablen Größen i = Kanalnummer, v = Wortnummer und m = Eingangsnummer gebildet werden, daß den Variablen i, m jeweils die Adresswerte gemäß der Vermittlungsvorschrift aus dem Steuerspeicher zugewiesen werden, so daß die raum- und zeitlagenrichtige Vermittlung der einzelnen Kanäle gewährleistet ist.

2. Schaltungsanordnung zur blockierungsfreien Vermittlung von N Eingangsdatenströmen, die jeweils eine TDMA-Rahmenstruktur der Länge T aus K Kanälen mit jeweils W Worten zu je S Bit aufweisen und auf einen Input-Bus mit der Wortbreite S gemultiplext und von dort in einer Zeitstufe zwischengespeichert und im nächsten Zeitrahmen auf einen Output-Bus mit der Wortbreit S ausgespeichert werden, auf P Ausgangsdatenströme, die jeweils ebenfalls eine TDMA-Rahmenstruktur der Länge T aus U Kanälen mit jeweils W Worten zu je S Bit aufweisen und aus dem Output-Bus gemultiplext werden, wobei jeder Kanal die einheitliche Bitrate R aufweist und wobei die Bedingung $N \cdot K = P \cdot U$ gilt,

wobei ein Steuerspeicher vorgesehen ist, mittels dem die einzelnen Speicherzellen der Zeitstufe entsprechend der Vermittlungsvorschrift adressiert und die darin enthaltenen Worte auf den Output-Bus ausgelesen werden, dadurch gekennzeichnet, daß $K \cdot W = 2^x$ mit x = einer natürlichen Zahl 1 $\geq$ 1 ist, daß die Zeitstufe mit den gemultiplexten Worten aus dem Input-Bus bereichsweise so beschrieben wird, daß die W aufeinanderfolgenden Worte eines Kanals in der gleichen Reihenfolge jeweils hintereinander in einem Block stehen und die Blöcke aufeinanderfolgender Kanäle eines Einganges ebenfalls hintereinander in einem Bereich stehen und die Bereiche aufeinanderfolgender Eingänge hintereinander eingeschrieben sind, daß die Schreibadressen durch zwei Binärzähler und die Leseadressen durch einen Binärzähler erzeugt werden, daß die Leseadressen nach der Gleichung
$$m \cdot K \cdot W + i \cdot W + v$$
mit den variablen Größen i = Kanalnummer, m = Eingangsnummer, v = Wortnummer gebildet werden, daß den Variablen i und m jeweils gemäß der Vermittlungsvorschrift die Adresswerte aus dem Steuerspeicher zugewiesen werden, so daß die raum- und zeitlagenrichtige Vermittlung der einzelnen Kanäle bzw. der Worte eines Kanals gewährleistet sind.

3. Schaltungsanordnung nach Anspruch 1 oder 2, dadurch gekennzeichnet, daß die Eingangs- und/oder Ausgangsdatenströme seriell sind.

4. Schaltungsanordnung nach Anspruch 1 oder 2, dadurch gekennzeichnet, daß der Steuerspeicher als Festverdrahtung realisiert ist, welche sequentiell abgefragt wird.

5. Schaltungsanordnung nach einem der vorhergehenden Ansprüche, dadurch gekennzeichnet, daß die Zeitstufe als Wechselpufferspeicher mit zwei Bereichen realisiert ist, wobei abwechselnd der eine Bereich beschrieben und der andere Bereich ausgelesen wird.

6. Schaltungsanordnung nach Anspruch 3 bis 5 und Anspruch 2, dadurch gekennzeichnet, daß der eine Schreibzähler (Eingangszähler) modulo N mit der Bustaktfrequenz $f_B = N \cdot K \cdot R/S$ und der andere Schreibzähler (Kanal/Wortzähler) mit dem N-ten Teil der Bustaktfrequenz $f_B$ durch das Überlaufbit des Schreibzählers getaktet werden.

**7.** Schaltungsanordnung nach einem der vorhergehenden Ansprüche,
dadurch gekennzeichnet, daß der Steuerspeicher die Größe N x K x ld (N x K) bit hat.

## Claims

**1.** Circuit arrangement for switching, without blocking, N input data streams which each have a TDMA frame structure of the length T comprising K channels with in each case W words per S bits each and are multiplexed onto an input bus with the word length S and are buffered from there in a time stage and read out in the next time frame onto an output bus with the word length S, onto P output data streams which also each have a TDMA frame structure of the length T comprising U channels with in each case W words per S bits each and are multiplexed out of the output bus, each channel having the uniform bit rate R and the condition $N \cdot K = P \cdot U$ applying, a control memory being provided by means of which the individual memory cells of the time stage are addressed in accordance with the switching rule and the words contained in it are read out onto the output bus, characterized in that

$N \cdot W = 2^x$ where x = a natural number $\geq$ 1, in that the time stage is sequentially written from the input bus, in that a single binary counter is provided which counts modulo $N \cdot K \cdot W$ and produces both the write and the read addresses, in that the read addresses are formed according to the expression

$i \cdot N \cdot W + V \cdot N + m$ with the variables i = channel number, v = word number and m = input number, in that the variables i, m are respectively assigned the address values from the control memory in accordance with the switching rule so that it is ensured that the individual channels are switched with correct positioning and timing.

**2.** Circuit arrangement for switching, without blocking, N input data streams which each have a TDMA frame structure of the length T comprising K channels with in each case W words per S bits each and are multiplexed onto an input bus with the word length S and are buffered from there in a time stage and read out in the next time frame onto an output bus with the word length S, onto P output data streams which also each have a TDMA frame structure of the length T comprising U channels with in each case W words per S bits each and are multiplexed out of the output bus, each channel having the uniform bit rate R and the condition $N \cdot K = P \cdot U$ applying, a control memory being provided by means of which the individual memory cells of the time stage are addressed in accordance with the switching rule and the words contained in it are read out onto the output bus, characterized in that

$K \cdot W = 2^x$ where x = a natural number $\geq$ 1, in that the multiplexed words from the input bus are written into certain areas of the time stage in such a way that the W successive words of a channel are located in each case in succession in a block in the same sequence and the blocks of successive channels of an input are likewise located in succession in an area and the areas of successive inputs are written in in succession, in that the write addresses are produced by two binary counters and the read addresses are produced by one binary counter, in that the read addresses are formed according to the

equation $m \cdot K \cdot W + i \cdot W + v$ with the variables i = channel number, m = input number, v = word number, in that the variables i and m are respectively assigned the address values from the control memory in accordance with the switching rule so that it is ensured that the individual channels and words of a channel are switched with correct positioning and timing.

**3.** Circuit arrangement according to Claim 1 or 2, characterized in that the input data streams and/or output data streams are serial.

**4.** Circuit arrangement according to Claim 1 or 2, characterized in that the control memory is realized as a hard-wired circuit which is sequentially interrogated.

**5.** Circuit arrangement according to one of the preceding claims, characterized in that the time stage is realized as a removable buffer memory with two areas, one area being written and the other area being read alternately.

**6.** Circuit arrangement according to Claim 3 to 5 and Claim 2, characterized in that one of the write counters (input counter) is clocked modulo N with the bus clock frequency $f_B = N \cdot K \cdot R/S$ and the other write counter (channel/word counter) is clocked with the N-th part of the bus clock frequency $f_B$ by means of the overflow bit of the write counter.

**7.** Circuit arrangement according to one of the preceding claims, characterized in that the control memory is of the size $N \times K \times ld (N \times K)$ bits.

**Revendications**

1. Circuit pour la transmission sans blocage de N flux de données d'entrée ayant chaque fois une structure de trame TDMA de longueur T formée de K canaux avec chaque fois W mots et chacun S bits, et qui sont multiplexés dans un bus d'entrée avec une largeur de mot S pour être enregistrés de façon intermédiaire dans un étage de temps et être sortis de mémoire dans la trame de temps suivante pour passer dans un bus de sortie à largeur de mot S, suivant P flux de données de sortie ayant également une structure de trame TDMA de longueur T et à partir de U canaux avec chaque fois W mots ayant chacun S bits et être démultiplexés sur le bus de sortie, chaque canal ayant la même vitesse de débit de bit R et la condition $N \cdot K = P \cdot U$ étant vraie, une mémoire de commande intermédiaire assurant l'adressage des différentes cellules de mémoire de l'étage de temps en fonction de la règle de transmission et assurant la lecture des mots contenus dans la mémoire sur le bus de sortie, circuit caractérisé en ce que l'on a $N \cdot W = 2^x$, avec x = nombre entier

   $\geq 1$,
   l'étage de temps est décrit séquentiellement dans le bus d'entrée

   - il y a un seul compteur binaire qui compte en modulo $N \cdot K \cdot W$ et génère à la fois les adresses d'écriture et les adresses de lecture,
   - les adresses de lecture sont formées selon l'équation $i \cdot N \cdot W + v \cdot N + m$, avec pour variables :

     i = numéro de canal
     v = numéro de mot
     m = numéro d'entrée,

   - on attribue aux variables i, m chaque fois les adresses selon la règle de transmission de la mémoire de commande pour assurer la transmission des différents canaux de manière correcte dans le temps et dans l'espace.

2. Circuit de transmission sans blocage de N flux de données d'entrée ayant chaque fois une structure de trame TDMA de longueur T à partir de K canaux avec chaque fois W mots de chacun S bits, et multiplexage dans un but d'entrée à largeur de mot S pour y être enregistrés de façon intermédiaire dans un étage de temps et être sortis de mémoire dans la trame de temps suivante pour passer dans un bus de sortie à largeur de mot S, en grand P flux de données de sortie ayant chaque fois également une structure de trame TDMA de longueur T à partir de U canaux avec chaque fois W mots de chacun S bits et être démultiplexés dans un bus de sortie, chaque canal ayant la même vitesse de débit de bit R et la condition $N \cdot K = P \cdot U$ s'appliquant,

   une mémoire de commande assurant l'adressage des différentes cellules de mémoire de l'étage de temps selon la prescription de transmission et la lecture des mots de la mémoire sur le bus de données,
   circuit caractérisé en ce que l'on a $K \cdot W = 2^x$

   avec x = nombre entier $\geq 1$
   l'étage de temps reçoit des enregistrements par zone avec des mots multiplexés provenant du bus d'entrée, de façon que W mots successifs d'un canal se trouvent dans le même ordre chaque fois les uns à la suite des autres dans un bloc et que les blocs de canaux successifs d'une entrée sont également les uns derrière les autres dans une zone et que les zones sont enregistrées dans les entrées successives,

   - les adresses d'écriture sont générées par deux compteurs binaires et les adresses de lecture par un compteur binaire,
   les adresses de lecture sont formées selon l'équation $m \cdot K \cdot W + i \cdot W + v$, dans laquelle

     i = numéro de canal
     m = numéro d'entrée
     v = numéro de mot,

   les variables i et m étant attribuées aux adresses de la mémoire de commande selon la règle de transmission, pour garantir la transmission des différents canaux ou des différents mots d'un canal de manière correcte dans le temps et dans l'espace.

3. Circuit selon la revendication 1 ou 2, caractérisé en ce que les flux de données d'entrée et/ou de sortie sont des flux série.

4. Circuit selon les revendications 1 ou 2, caractérisé en ce que la mémoire de commande est une mémoire câblée fixe interrogée de manière séquentielle.

5. Circuit selon l'une des revendications précédentes, caractérisé en ce que l'étage de temps est réalisé sous la forme d'une mémoire tampon alternée avec deux zones et, en alternance, l'une des zones reçoit des enregistrements et l'autre est lue.

6. Circuit selon les revendications 3 à 5 et la revendication 2, caractérisé en ce qu'un compteur d'écriture (compteur d'entrée) travaillant en modulo N est commandé à la fréquence d'horloge de bus $f_B = N \cdot K \cdot R/S$ et l'autre compteur d'écriture (compteur de canal/mot) est commandé à la fraction n de la fréquence d'horloge de bus $f_B$ par le bit de débordement du compteur d'écriture.

7. Circuit selon l'une des revendications précédentes, caractérisé en ce que la mémoire de commande a pour taille N x K x ld (N x K) bits.

Beispiel: N= 4 Eingänge
K= 1024 Kanäle
W= 4 Worte

| Multiplex-Zyklus | Eingang m | Kanal i | Wort v | RAM-Adresse |
|---|---|---|---|---|
| 1 | 0 | 0 | 0 | 0 |
| 2 | 1 | 0 | 0 | 1 |
| 3 | 2 | 0 | 0 | 2 |
| 4 | 3 | 0 | 0 | 3 |
| 5 | 0 | 0 | 1 | 4 |
| 6 | 1 | 0 | 1 | 5 |
| 7 | 2 | 0 | 1 | 6 |
| 8 | 3 | 0 | 1 | 7 |
| 9 | 0 | 0 | 2 | 8 |
| 10 | 1 | 0 | 2 | 9 |
| 11 | 2 | 0 | 2 | 10 |
| 12 | 3 | 0 | 2 | 11 |
| 13 | 0 | 0 | 3 | 12 |
| 14 | 1 | 0 | 3 | 13 |
| 15 | 2 | 0 | 3 | 14 |
| 16 | 3 | 0 | 3 | 15 |
| 17 | 0 | 1 | 0 | 16 |
| 18 | 1 | 1 | 0 | 17 |
| 19 | 2 | 1 | 0 | 18 |
| 20 | 3 | 1 | 0 | 19 |
| 21 | 0 | 1 | 1 | 20 |
| 22 | 1 | 1 | 1 | 21 |
| 23 | 2 | 1 | 1 | 22 |
| 24 | 3 | 1 | 1 | 23 |
| 25 | 0 | 1 | 2 | 24 |
| 26 | 1 | 1 | 2 | 25 |
| 27 | 2 | 1 | 2 | 26 |
| 28 | 3 | 1 | 2 | 27 |
| 29 | 0 | 1 | 3 | 28 |
| 30 | 1 | 1 | 3 | 29 |
| 31 | 2 | 1 | 3 | 30 |
| 32 | 3 | 1 | 3 | 31 |
| 33 | 0 | 2 | 0 | 32 |
| . | . | . | . | . |
| . | . | . | . | . |
| . | . | . | . | . |
| 16384 | 3 | 1023 | 3 | 16383 |

Tabelle 1: Multiplex-Algorithmus und RAM-Adresse für
Fall a): Rein sequentielles Beschreiben

Beispiel: N= 3 Eingänge
K= 1024 Kanäle
W= 4 Worte

| Multiplex-Zyklus | Eingang m | Kanal i | Wort v | RAM-Adresse |
|---|---|---|---|---|
| 1 | 0 | 0 | 0 | 0 |
| 2 | 1 | 0 | 0 | 4096 |
| 3 | 2 | 0 | 0 | 8192 |
| 4 | 0 | 0 | 1 | 1 |
| 5 | 1 | 0 | 1 | 4097 |
| 6 | 2 | 0 | 1 | 8193 |
| 7 | 0 | 0 | 2 | 2 |
| 8 | 1 | 0 | 2 | 4098 |
| 9· | 2 | 0 | 2 | 8194 |
| 10 | 0 | 0 | 3 | 3 |
| 11 | 1 | 0 | 3 | 4099 |
| 12 | 2 | 0 | 3 | 8195 |
| 13 | 0 | 1 | 0 | 4 |
| 14 | 1 | 1 | 0 | 4100 |
| 15 | 2 | 1 | 0 | 8196 |
| 16 | 0 | 1 | 1 | 5 |
| 17 | 1 | 1 | 1 | 4101 |
| 18 | 2 | 1 | 1 | 8197 |
| 19 | 0 | 1 | 2 | 6 |
| 20 | 1 | 1 | 2 | 4102 |
| 21 | 2 | 1 | 2 | 8198 |
| 22 | 0 | 1 | 3 | 7 |
| 23 | 1 | 1 | 3 | 4103 |
| 24 | 2 | 1 | 3 | 8199 |
| 25 | 0 | 2 | 0 | 8 |
| . | . | . | . | . |
| . | . | . | . | . |
| . | . | . | . | . |
| 12288 | 2 | 1023 | 3 | 12287 |

Tabelle 2: Multiplex-Algorithmus und RAM-Adresse für
Fall b): Bereichsweises Beschreiben

**T–
Stage**

Input Bus

Ping

Output Bus

1

Pong

MUX

DEMUX

N

P

**T–Stage
Control**

Bild 1 :  Vermittlungssystem mit Multiplexem und zentraler T–Stage  (Memory Switch)

Input Bus

Output Bus

1

**T–
Stage**

1

Ping

Input Modules

Output Modules

Pong

N

P

**T–Stage
Control**

Bild 2 :  Modulares Vermittlungssystem mit zentraler T–Stage

Bild 3a : Beispiel für "Rein sequentielles Beschreiben ", Multiplex Algorithmus

EP 0 507 303 B1

Bild 3b : Beispiel für "Rein sequentielles Beschreiben " Demultiplex Algorithmus

**Bild 4 :  T-Stage Control für Fall a) ' Rein sequentielle Speicherung '**

EP 0 507 303 B1

RAM-Adresse = ( i * N * W ) + ( v * N ) + m

Beispiel :
N = 4
K = 1024
W = 4

$2^{13}$  $2^{12}$  $2^{11}$  $2^{10}$  $2^9$  $2^8$  $2^7$  $2^6$  $2^5$  $2^4$  $2^3$  $2^2$  $2^1$  $2^0$

MSB | Bit 14 | Bit 13 | Bit 12 | Bit 11 | Bit10 | Bit 9 | Bit 8 | Bit 7 | Bit 6 | Bit 5 | Bit 4 | Bit 3 | Bit 2 | Bit 1 | LSB

m = 0, 1, 2, 3

v * N = 0, 4, 8, 12

i * N * W = 0, 16, 32, 48, . . . , 16368

Keine Ueberlappung der Terme ! ( Bit 1 nur bei Term m verdrahtet)

Bild 5 : Adressberechnung bei 'Rein Sequentiellem Beschreiben'

EP 0 507 303 B1

Eingänge
(seriell)

I1 Ch 2a..d | I1 Ch 1a..d | I1 Ch 0a..d

I1

I2 Ch 2a..d | I2 Ch 1a..d | I2 Ch 0a..d

I2

I3 Ch 2a..d | I3 Ch 1a..d | I3 Ch 0a..d

I3

t

MUX

SOF   Cl

Ausgang

SOF

T-stage Input Bus

I2 Ch 1a | I1 Ch 1a | I3 Ch 0d | I2 Ch 0d | I1 Ch 0d | I3 Ch 0c | I2 Ch 0c | I1 Ch 0c | I3 Ch 0b | I2 Ch 0b | I1 Ch 0b | I3 Ch 0a | I2 Ch 0a | I1 Ch 0a

t

T-stage

I1 Ch 0a
I1 Ch 0b
I1 Ch 0c
I1 Ch 0d
I1 Ch 1a
I1 Ch 1b
I1 Ch 1c
I1 Ch 1d
I1 Ch 1a
I1 Ch 1b
I1 Ch 1c
.
.
I2 Ch 0a
I2 Ch 0b

Bild 6a : Beispiel für "Bereichsweises Beschreiben", Multiplex Algorithmus

EP 0 507 303 B1

Bild 6b : Beispiel für "Bereichsweises Beschreiben " Demultiplex Algorithmus

Bild 7: T-Stage Control für Fall b) ' Bereichsweise Speicherung '

$$RAM\text{-}Adresse = (\, m * K * W\,) + (\, i * W\,) + v$$

Beispiel :
N = 3
K = 1024
W = 4

$2^{13}$ $2^{12}$ $2^{11}$ $2^{10}$ $2^9$ $2^8$ $2^7$ $2^6$ $2^5$ $2^4$ $2^3$ $2^2$ $2^1$ $2^0$

MSB | Bit 14 | Bit 13 | Bit 12 | Bit 11 | Bit10 | Bit 9 | Bit 8 | Bit 7 | Bit 6 | Bit 5 | Bit 4 | Bit 3 | Bit 2 | Bit 1 | LSB

v = 0, 1, 2, 3

i * W = 0, 4, 8, 12, . . . . , 4092

m * K * W = 0, 4096, 8192

Keine Ueberlappung der Terme ! ( Bit 1 nur bei Term v verdrahtet)

Bild 8 : Adressberechnung bei 'Bereichsweisem Beschreiben '